# EUROPÄISCHE PATENTANMELDUNG

(11) **EP 4 488 032 A1**
(43) Veröffentlichungstag der Anmeldung: **08.01.2025**
(21) Anmeldenummer: 24185182.3
(22) Anmeldetag: 28.06.2024
(51) Int. Cl.: B29C 48/50, B29C 48/64, B29C 48/505, B29C 48/535, B29C 48/625, B29C 48/605, B29C 48/02, B29B 7/74

(54) **EXTRUDER MIT OPTIMIERTEM SCHNECKENDESIGN UND VERFAHREN ZUR EXTRUSION EINER VULKANISIERBAREN KAUTSCHUKMISCHUNG**

(30) Priorität: 06.07.2023 DE 102023206398
(71) Anmelder: Continental Reifen Deutschland GmbH, 30175 Hannover (DE)
(72) Erfinder: Dr. Sharifi, Monir, 30175 Hannover (DE)
(74) Vertreter: Continental Corporation

(57) **Zusammenfassung**

Die Erfindung betrifft einen Extruder (10) zur Verwendung bei der Extrusion von vulkanisierbaren Kautschukmischungen, umfassend: i) einen Extruderkörper (12) mit einer im Inneren angeordneten Extruderkammer (14), wobei die Extruderkammer (14) eine Eingabeöffnung (16) und eine Extrusionsöffnung (18) umfasst, wobei die Extruderkammer (14) eine Länge im Bereich von 10*D bis 20*D aufweist, wobei D der Durchmesser der Extruderkammer (14) ist, und ii) eine rotierbar in der Extruderkammer (14) angeordnete Schneckenwelle (20), wobei der Extruder (10) einen im Bereich der Eingabeöffnung (16) angeordneten Einziehbereich (22), einen ersten Verarbeitungsbereich (24) und einen zweiten Verarbeitungsbereich (26) umfasst, wobei der erste Verarbeitungsbereich (24) an den Einziehbereich (22) anschließt und wobei der zweite Verarbeitungsbereich (26) zwischen dem ersten Verarbeitungsbereich (24) und der Extrusionsöffnung (18) angeordnet ist, wobei sich die Schneckenwelle (20) im Einziehbereich (22) von der Schneckenwelle (20) im ersten Verarbeitungsbereich (24) unterscheidet, wobei die Schneckenwelle (20) im ersten Verarbeitungsbereich (24) eine eigängige Schnecke mit einem Schneckensteg und im zweiten Verarbeitungsbereich (26) eine zweigängige Schnecke mit zwei Schneckenstegen.

## Beschreibung

Die Erfindung betrifft einen Extruder zur Verwendung bei der Extrusion von vulkanisierbaren Kautschukmischungen ein Extrudersystem, umfassend einen solchen Extruder und ein Verfahren zur Extrusion einer vulkanisierbaren Kautschukmischung mit einem entsprechenden Extrudersystem.

In der Kunststoff verarbeitenden Industrie im Allgemeinen und der Kautschuk verarbeitenden Industrie im Speziellen sind sogenannte Extruder, d. h. Vorrichtungen zum Extrudieren von Polymerzusammensetzungen, ein zentraler Bestandteil vieler Fertigungsverfahren. Die in den unterschiedlichen Bereichen eingesetzten Extruder werden dabei regelmäßig hinsichtlich ihrer konstruktiven Ausgestaltungen an die jeweiligen Anwendungszwecke angepasst, insbesondere hinsichtlich der Länge des Extruderkörpers sowie hinsichtlich der Zahl und Ausgestaltungen der im Extruder eingesetzten Schneckenwellen, welche für den Vortrieb des Extrudates in der Extruderkammer sowie dessen mechanische Belastung während des Extrusionsprozesses maßgeblich verantwortlich sind. Weitere Informationen zum technologischen Hintergrund sind beispielsweise in der EP 1710072 B1, der EP 3702125 A2, der EP 3623135 A1, der DE 102011009629 B4, der DE 3150719 C2, der JP 2009090544 A oder der EP 3915758 A1 offenbart.

In der Kautschuk verarbeitenden Industrie, insbesondere bei der Reifenherstellung, kommen Extrusionsprozesse insbesondere bei der Herstellung sogenannter "grüner" Bauteile zum Einsatz, d. h. solcher Bauteile, welche aus vulkanisierbaren Kautschukmischungen bestehen oder solche vulkanisierbaren Kautschukmischungen zumindest umfassen, jedoch noch nicht mittels Vulkanisation in die entsprechenden Gummiprodukte überführt wurden. Hierbei kommen je nach Anwendungserfordernis verschiedene Extrusionsprozesse zum Einsatz. Bekannte Extrusionsverfahren sind dabei insbesondere die sogenannte Warmfütter- und die Kaltfütter-Extrusion. Beim Warmfütterprozess wird die Mischung vor der Eingabe in den Extruder mittels Walzen und/oder Extrudern plastifiziert. Erst die derart aufgewärme Mischung wird anschließend in diesem plastifizierten Zustand in den zur Ausformung der grünen Bauteile verwendeten Extruder gefüttert, welcher üblicherweise mit einer Länge von 6 - 7 D, d. h. dem 6 bis 7-fachen des Extruderdurchmessers vergleichsweise kurz ist und regelmäßig im Inneren glatte Wandungen aufweist und entsprechend insbesondere ohne in den Extruderraum hineinragende Stifte ausgebildet ist.

Im Gegensatz hierzu wird die Mischung im Rahmen des sogenannten Kaltfütterprozesses direkt in den Extruder gegeben, d. h. zuvor nicht plastifiziert, sodass die Plastifizierung erst im Kaltfütterextruder erfolgt. Solche Kaltfütterextruder haben vor diesem Hintergrund üblicherweise eine Länge von 12 - 18 D, d. h. dem 12 bis 18-fachen des Extruderdurchmessers und sind häufig im Inneren mit Stiften versehen, durch welche die Fluiddynamik der Mischung im Inneren des Extruders beeinflusst wird.

Der Einsatz von Kaltfütterprozessen sowie dafür ausgelegter Extruder wird hinsichtlich zahlreicher Aspekte als vorteilhaft angesehen. Jedoch wird zuweilen gefunden, dass bestimmte Kautschukmischungen in diesem Kaltfütterprozess sehr hohe Schwankungen hinsichtlich des Gewichts und der Geometrie aufweisen, sodass die Qualität der mittels Extrusion erhaltenen "grünen" Bauteile zuweilen als unzureichend bewertet wird.

Eine Lösung zur Verbesserung dieses Problems besteht darin, solche Mischungen, welche beim Kaltfütterprozess hohe Schwankungen in der Produktqualität zeigen, quasi in Anlehnung an einen Warmfütterprozess, zumindest teilweise thermisch vorzubehandeln und erst anschließend in den Extruder zu geben. Hierdurch können in vorteilhafter Weise die Schwankungen reduziert und eine verbesserte Produktqualität der "grünen" Bauteile erreicht werden.

Trotz der Verbesserungen, die durch das thermische Vorbehandeln erzielbar sind, zeigt sich bei dieser Verfahrensführung unter Einsatz solcher Extruder, die konstruktiv eigentlich für einen Kaltfütterprozess vorgesehen sind, dass der erzielbare Durchsatz hierdurch nachteilig beeinflusst werden kann und in vielen Fällen deutlich sinkt. Zudem werden bei dieser Verfahrensführung, bei welcher vorgewärmte vulkanisierbare Kautschukmischungen in einen eigentlich für den Kaltfütterprozess vorgesehenen langen Extruder gegeben werden, häufig sehr hohe Temperaturen erreicht. Diese hohen Temperaturen sind nachteilig, da sie eine Vulkanisation der vulkanisierbaren Kautschukmischung und damit ein ungewolltes Vernetzen der "grünen" Mischung verursachen können.

Die primäre Aufgabe der vorliegenden Erfindung war es, die Nachteile des Standes der Technik auszuräumen oder zumindest abzuschwächen.

Insbesondere war es eine Aufgabe der vorliegenden Erfindung, einen Extruder zur Verwendung bei der Extrusion von vulkanisierbaren Kautschukmischungen sowie ein darauf basierendes Extrudersystem und ein Verfahren zur Extrusion einer vulkanisierbaren Kautschukmischung anzugeben, mit der auch solche vulkanisierbaren Kautschukmischungen, welche in einem klassischen Kaltfütterprozess nachteilige Schwankungen in der Qualität des extrudierten Materials zeigen, in zeit- und kosteneffizienter Weise sowie unter Realisierung hoher Durchsätze und einer vorteilhaften Produktqualität extrudiert werden können.

Es war eine Aufgabe der vorliegenden Erfindung, dass mit dem anzugebenden Extruder, bzw. Extrusionsverfahren, die Vorteile typischer Kaltfütterprozesse möglichst weitgehend beibehalten werden sollten, wobei der Durchsatz gegenüber dem klassischen Kaltfütterprozess zumindest nicht verringert und idealerweise sogar erhöht werden sollte. Hierbei war es wünschenswert, dass gleichzeitig auch die Mischungstemperatur im Extruderkopf gegenüber klassischen Kaltfütterprozessen nicht bzw. möglichst wenig verringert sein sollte.

Es war dabei eine Aufgabe der vorliegenden Erfindung, dass mit dem anzugebenden Extruder sowohl ein klassischer Kaltfütterprozess als auch eine Verfahrensführung mit vorgewärmten Füttermaterialien möglich sein sollte, bevorzugt ohne die Notwendigkeit für konstruktive Veränderungen am Extruder.

Der Erfinder der vorliegenden Erfindung hat nunmehr gefunden, dass sich die vorstehend beschriebenen Aufgaben lösen lassen, wenn in einem Verfahren zur Extrusion einer vulkanisierbaren Kautschukmischung ein vorteilhafter Extruder eingesetzt wird, welcher hinsichtlich seiner Länge sowie optional des Einsatzes von Extruderstiften prinzipiell für die Verarbeitung kalter Mischungen vorgesehen ist, d. h. konstruktiv hinsichtlich des Grundaufbaus einem Kaltfütterextruder entspricht, wenn die vulkanisierbare Kautschukmischung vor der Eingabe in den Extruder mit einer Temperiereinheit vorgewärmt wird, um auch bei anspruchsvollen Kautschukmischungen eine gute Prozessierbarkeit zu gewährleisten, wenn der Extruder mit einem spezifischen Schneckendesign ausgerüstet wird, welches auf die Verarbeitung von vorgewärmten vulkanisierbaren Kautschukmischungen in einem eigentlich auf die Verarbeitung von kalten Mischungen ausgelegten Extruder optimiert ist, wobei die Schnecke neben dem Einziehbereich zumindest zwei unterschiedliche Sektionen aufweist, wie es in den Ansprüchen definiert ist. Der Erfinder hat gefunden, dass es mit dem vorteilhaften Schneckendesign möglich ist, mit dem hinsichtlich seiner Länge eigentlich auf die Verarbeitung kalter Kautschukmischungen ausgelegten Extruder auch vorgewärmte Mischungen im Wesentlichen ohne Durchsatzverluste und ohne signifikante Temperaturerhöhung, d. h. insbesondere ohne eine ungewünschte Vulkanisation im Extruder, stabil zu extrudieren, wobei der Durchsatz in eigenen Experimenten in vorteilhafter Weise um ca. 30 bis 70 % erhöht werden konnte.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Extrudersysteme und Verfahren ergeben sich aus den Merkmalen bevorzugter Extruder.

Die Erfindung betrifft insbesondere einen Extruder zur Verwendung bei der Extrusion von vulkanisierbaren Kautschukmischungen, umfassend:
i) einen Extruderkörper mit einer im Inneren angeordneten Extruderkammer, wobei die Extruderkammer eine Eingabeöffnung und eine Extrusionsöffnung umfasst, wobei die Extruderkammer eine Länge im Bereich von 10*D bis 20*D aufweist, wobei D der Durchmesser der Extruderkammer ist, und
ii) eine rotierbar in der Extruderkammer angeordnete Schneckenwelle,
   wobei der Extruder einen im Bereich der Eingabeöffnung angeordneten Einziehbereich, einen ersten Verarbeitungsbereich und einen zweiten Verarbeitungsbereich umfasst,
   wobei der erste Verarbeitungsbereich an den Einziehbereich anschließt und wobei der zweite Verarbeitungsbereich und der Extrusionsöffnung angeordnet ist,
   wobei sich die Schneckenwelle im Einziehbereich hinsichtlich der Zahl der Schneckenstege und/oder der Steigung des oder der Schneckenstege und/oder der Form des oder der Schneckenstege von der Schneckenwelle im ersten Verarbeitungsbereich unterscheidet,
   wobei die Schneckenwelle im ersten Verarbeitungsbereich eine eigängige Schnecke mit einem Schneckensteg und im zweiten Verarbeitungsbereich eine zweigängige Schnecke mit zwei Schneckenstegen ist.

Der erfindungsgemäße Extruder ist dafür vorgesehen, bei der Extrusion von vulkanisierbaren Kautschukmischungen eingesetzt zu werden. Insoweit ist jedoch nicht auszuschließen, dass die vorteilhafte konstruktive Ausgestaltung des Extruders auch in anderen Industriebereichen, d. h. bei der Verarbeitung anderer Kunststoffe, ebenfalls vorteilhaft ist.

Der erfindungsgemäße Extruder entspricht hinsichtlich seines grundlegenden Designs abgesehen von der Extruderschnecke zunächst einem aus dem Stand der Technik bekannten Extruder, wie er insbesondere für Kaltfütterprozesse eingesetzt wird. Hierfür umfasst der Extruder im Extruderkörper eine Extruderkammer, welche im späteren Extrusionsprozess das plastifizierte Extrudat enthält, welches aus dem Material erzeugt wird, welches durch eine Eingabeöffnung in die Extruderkammer gegeben wird und nach Durchlaufen des Extruders durch die Extrusionsöffnung ausgegeben werden kann. Zur Förderung des plastifizierten Materials im Inneren der Extruderkammer umfasst der Extruder eine rotierbar in der Extruderkammer angeordnete Schneckenwelle, deren Design im Rahmen der vorliegenden Erfindung spezifisch optimiert ist.

Zumindest theoretisch ist es denkbar, dass sich das vorliegend als vorteilhaft identifizierte Design der Extruderschnecke auch in anderen Anwendungen mit einem komplexen Extruderdesign als vorteilhaft erweist, beispielsweise in einem Mehrschneckenextruder oder in einem Extruder mit einem komplexeren Querschnitt der Extruderkammer. Mit Blick auf den angestrebten Anwendungsbereich in der Kautschuk verarbeitenden Industrie und die Umsetzung einer konstruktiv vergleichsweise einfachen sowie leistungsfähigen Konstruktion ist es jedoch für im Wesentlichen alle Fälle bevorzugt, als Grundlage für den Einsatz des spezifischen Schneckendesigns einen Extruderkörper zu verwenden, wie er auch von klassischen Kaltfütterextrudern aus der Kautschuk verarbeitenden Industrie bekannt ist, d. h. insbesondere einen Extruderkörper, welcher im Wesentlichen durchgehend einen im Wesentlichen gleichbleibenden kreisförmigen Querschnitt aufweist und auf den Einsatz einer einzigen Extruderschnecke ausgelegt ist. Bevorzugt ist entsprechend ein erfindungsgemäßer Extruder, wobei der Extruder ein Einschneckenextruder ist. Bevorzugt ist zusätzlich oder alternativ auch ein erfindungsgemäßer Extruder, wobei der Extruder genau eine Extruderkammer umfasst.

Bevorzugt ist zusätzlich oder alternativ ein erfindungsgemäßer Extruder, wobei die Extruderkammer einen im Wesentlichen kreisförmigen Querschnitt aufweist. Bevorzugt ist zusätzlich oder alternativ auch ein erfindungsgemäßer Extruder, wobei die Extruderkammer über 95 % oder mehr der Länge der Schneckenwelle, bevorzugt über 98 % oder mehr der Länge der Schneckenwelle, besonders bevorzugt über 99 % oder mehr der Länge, insbesondere im Wesentlichen über die gesamte Länge der Schneckenwelle, einen gleichbleibenden Durchmesser aufweist.

Für die weit überwiegende Zahl der Fälle relevant ist ein erfindungsgemäßer Extruder, wobei der Extruder zusätzlich umfasst:
iii) eine Antriebseinheit zur Rotation der Schneckenwelle, wobei die Antriebseinheit bevorzugt ein Elektromotor ist, und/oder
iv) eine Temperatursteuerungsvorrichtung zur Steuerung der Temperatur im Inneren der Extruderkammer.

Die Extruderkammer des erfindungsgemäßen Extruders weist eine Länge im Bereich des 10- bis 20-fachen des Durchmessers der Extruderkammer auf und entspricht hinsichtlich dieser Bereiche solchen Extrudern, die üblicherweise im Kaltfütterprozess eingesetzt werden. Bevorzugt ist ein erfindungsgemäßer Extruder, wobei D im Bereich von 80 bis 300 mm, bevorzugt im Bereich von 90 bis 250 mm, besonders bevorzugt im Bereich von 100 bis 200 mm, liegt.

Im Falle einer Extruderkammer mit variierendem Durchmesser handelt es sich um einen erfindungsgemäßen Extruder, wobei D der mittlere Durchmesser der Extruderkammer oder der Durchmesser der Extruderkammer in der Mitte der Extruderkammer, bevorzugt der Durchmesser der Extruderkammer in der Mitte der Extruderkammer, ist.

Die Definition der Längendimension der Extruderkammer sowie einzelner Abschnitte der Extruderkammer bzw. der Extruderschnecke über die relative Angabe in Bezug auf den Durchmesser der Extruderkammer D ist für den Fachmann im Bereich der Extrusionstechnik eine übliche Vorgehensweise. Hierbei wird die Größe D in einigen Fällen auch auf den effektiven Durchmesser der Schneckenwelle, d.h. den Durchmesser der Projektion oder der Einhüllenden, bezogen. In der Praxis wird jedoch regelmäßig angestrebt, dass der äußere Kamm der Schneckenwelle möglichst nah an der Wandung der Extruderkammer vorbeigeführt wird, sodass sich in der Praxis nur wenige Unterschiede zu der alternativen Definition über den effektiven Durchmesser der Schneckenwelle ergeben. Bevorzugt ist ein erfindungsgemäßer Extruder, wobei die Schneckenstege im ersten Verarbeitungsbereich und/oder im zweiten Verarbeitungsbereich, bevorzugt in sämtlichen Verarbeitungsbereichen, in der Projektion auf die Ebene einen Durchmesser im Bereich von 0,001 *D bis 0,01 *D, bevorzugt im Bereich von 0,002*D bis 0,005*D, aufweisen.

Den Erfindern ist es gelungen, spezifische Längen der Extruderkammer zu identifizieren, die sich für den Einsatz bei der Verarbeitung von vorgewärmten vulkanisierbaren Kautschukmischungen im Rahmen des erfindungsgemäßen Verfahrens, wie es nachfolgend offenbart wird, als besonders geeignet erwiesen haben. Bevorzugt ist nämlich ein erfindungsgemäßer Extruder, wobei die Extruderkammer eine Länge im Bereich von 11*D bis 19*D, bevorzugt im Bereich von 12*D bis 18*D, besonders bevorzugt im Bereich von 13*D bis 17*D, alternativ bevorzugt im Bereich von 10*D bis 15*D, aufweist.

Der erfindungsgemäße Extruder weist zumindest drei verschiedene Bereiche auf, nämlich den Einziehbereich, den ersten Verarbeitungsbereich und den zweiten Verarbeitungsbereich. In Übereinstimmung mit dem fachmännischen Verständnis bezeichnet der Ausdruck Bereich dabei einen Abschnitt des Extruders bzw. der Extruderkammer, welcher von den anderen Abschnitten nicht baulich separiert sein muss und dies in bevorzugten Ausgestaltungen des Extruders auch nicht ist. Vielmehr unterscheiden sich die Bereiche, wie im Bereich des Extrusionstechnik üblich, durch die Ausgestaltung der Schneckenwelle in den unterschiedlichen Bereichen.

Ausgehend von dem an der Eingabeöffnung angeordneten Einziehbereich erstrecken sich der erste Verarbeitungsbereich und der zweite Verarbeitungsbereich in dieser Reihenfolge in Richtung der Extrusionsöffnung. Die vorteilhaften Eigenschaften des erfindungsgemäßen Extruders ergeben sich aus dem spezifischen Design der Extruderschnecke in den verschiedenen Bereichen, wie sie nachfolgend weiter offenbart sind, die vom Extrudat nacheinander durchlaufen werden. Der Fachmann versteht insoweit, dass es zumindest theoretisch denkbar ist, zwischen den erfindungswesentlichen Bereichen kleine Abschnitte vorzusehen, die beispielsweise ein leicht unterschiedliches Schneckendesign aufweisen, ohne dadurch die sich aus der Erfindung ergebenden Vorteile allzu stark zu reduzieren. Entsprechend ist es möglich, dass neben den vorstehend definierten Bereichen auch noch weitere Bereiche vorliegen. Allerdings ist es nach Einschätzung der Erfinder für im Wesentlichen alle Ausführungsformen bevorzugt, wenn die Extruderschnecke bzw. der Extruder möglichst weitgehend nur aus den entsprechenden, vorstehend definierten Bereichen besteht, die sich entsprechend möglichst nahtlos aneinander anreihen sollten. Eine besonders bevorzugte Extruderschnecke für den erfindungsgemäßen Extruder besteht entsprechend aus vier Sektionen, welche im Extruder die vier vorstehend bezeichneten Bereichen definieren. Bevorzugt ist vor diesem Hintergrund ein erfindungsgemäßer Extruder, wobei der zweite Verarbeitungsbereich an den ersten Verarbeitungsbereich anschließt, und/oder wobei der zweite Verarbeitungsbereich an der Extrusionsöffnung angeordnet ist. Bevorzugt ist zusätzlich oder alternativ auch ein erfindungsgemäßer Extruder, wobei der Extruder außer dem Einziehbereich, dem ersten Verarbeitungsbereich und dem zweiten Verarbeitungsbereich keine weiteren Bereiche mit einer Länge von 0,5*D oder mehr, bevorzugt keine weiteren Bereiche mit einer Länge von 0,2*D oder mehr, besonders bevorzugt keine weiteren Bereiche mit einer Länge von 0,1 *D oder mehr, ganz besonders bevorzugt gar keine weiteren Bereiche umfasst.

Sofern gegebenenfalls kleine Zwischenbereiche vorgesehen werden sollen, ist es nach Einschätzung der Erfinder für im Wesentlichen alle Ausführungsformen bevorzugt, wenn diese die durch die erfindungsgemäß vorzusehenden Bereiche erzeugte Fluiddynamik im Inneren der Extruderkammer möglichst wenig beeinflussen und stören. Insbesondere sollte die Extruderschnecke keine sogenannten Dammbereiche aufweisen, welche für manche Anwendungen eingesetzt werden, um die extrudierte Masse zwischen einem entsprechenden Damm, bei dem es sich meist um eine umlaufende ringförmige Erhebung auf der Schneckenwelle handelt, und der Innenwand der Extruderkammer besonders dünn auszuformen. Der Fachmann versteht insoweit, dass eine solche willentliche Stauung mit einem Dammabschnitt auf der Schneckenwelle dem angestrebten hohen Durchsatz zuwiderlaufen würde. Für im Wesentlichen alle Ausführungsformen bevorzugt ist entsprechend ein erfindungsgemäßer Extruder, wobei die Schneckenwelle keinen Dammabschnitt umfasst, und/oder wobei die Schneckenwelle keine auf gleicher Höhe des Extruders umlaufende, insbesondere vollständig umlaufende Sperrerhebung umfasst, deren Durchmesser im Bereich von 0,7*D bis 1*D, bevorzugt im Bereich von 0,5*D bis 1*D, liegt. In analoger Weise sollte im erfindungsgemäßen Extruder bevorzugt auch nicht dadurch der Effekt eines solchen Damms erzeugt werden, dass die Extruderwandung im Bereich der Schneckenwelle stellenweise künstlich verengt wird, wodurch der gleiche Staueffekt entstünde. Bevorzugt ist entsprechend zusätzlich oder alternativ auch ein erfindungsgemäßer Extruder, wobei die Extruderkammer zwischen der Einlassöffnung und der Extrusionsöffnung keine Dammstruktur umfasst, an der der Durchmesser der Extruderkammer um 50 % oder mehr, bevorzugt um 30 % oder mehr, besonders bevorzugt um 10 % oder mehr, reduziert ist.

Der unmittelbar an der Eingabeöffnung angeordnete Bereich des Extruders wird im Rahmen der vorliegenden Erfindung als Einziehbereich bezeichnet. In diesem Einziehbereich ist das Design der Schneckenwelle darauf ausgerichtet, die durch die Eingabeöffnung eingegebene vulkanisierbare Kautschukmischung möglichst effizient einzuziehen, über den Umfang der Extruderkammer zu verteilen und möglichst gleichmäßig an die nachgelagerten Bereiche der Extruderkammer, in denen die wesentliche Verarbeitung der Kautschukmischung erfolgt, weiterzugeben. Entsprechende Einziehbereiche sind bei Kaltfütterextrudern, an denen sich die vorliegende Erfindung orientiert, bekannt und können unterschiedlichste Schneckengeometrien aufweisen, wobei insbesondere auch komplexe Überlagerungen unterschiedlicher Schneckendesigns auftreten können. Gemein ist diesen Einziehbereichen bei typischen Kaltfütterextrudern, dass sich das Schneckendesign in jedem Fall von dem unterscheidet, welches im nachgelagerten Verarbeitungsbereich eingesetzt wird, da sich die Anforderungen an die gewünschte Wirkung der Bereiche unterscheiden. Der Einziehbereich selbst kann dabei unterschiedliche Teileinziehbereiche umfassen, zwischen denen sich das Schneckendesign unterscheiden kann. In Übereinstimmung mit diesem fachmännischen Verständnis wird vorstehend der Einziehbereich nicht nur durch seine Position an der Eingabeöffnung des Extruders charakterisiert, sondern auch definiert, dass er sich hinsichtlich der Ausgestaltung der Schneckenwelle vom anschließenden ersten Verarbeitungsbereich unterscheidet. Diese Unterscheidung bezieht sich dabei auf die maßgeblichen Kriterien der Schneckengestaltung, nämlich insbesondere die Zahl der Schneckenstege, beispielsweise im Unterschied einer viergängigen Schnecke zu der im ersten Verarbeitungsbereich einzusetzenden eingängigen Schnecke und/oder der Steigung bzw. Form der Schneckenstege. Bei hinsichtlich der Leistungsfähigkeit optimierten Einziehbereiche treten dabei zumeist zwei oder mehr, bevorzugt sämtliche, dieser Unterscheidungsmerkmale zumindest teilweise auf, da die gewünschte Einzieh- und Verteilwirkung sich zumeist sehr stark von der im ersten Verarbeitungsbereich erwünschten Wirkung unterscheidet, die insbesondere auf die Plastifikation der zuvor eingezogenen Kautschukmischung und nicht das effiziente Einziehen gerichtet ist. Bevorzugt ist ein erfindungsgemäßer Extruder, wobei die Schneckenwelle im Einziehbereich eine viergängige Schnecke oder eine sechsgängige Schnecke ist. Bevorzugt ist zusätzlich oder alternativ ein erfindungsgemäßer Extruder, wobei der Einziehbereich eine Länge im Bereich von 0,05*L bis 0,25*L, bevorzugt im Bereich von 0,1*L bis 0,2*L, aufweist, wobei L die Länge der Extruderkammer ist, und/oder wobei der Einziehbereich eine Länge im Bereich von 2*D bis 3*D, bevorzugt im Bereich von 2,25*D bis 2,75*D, aufweist.

Die in Extrusionsrichtung dem Einziehbereich nachgelagerten Verarbeitungsbereiche definieren sich maßgeblich zumindest über die Zahl der Schneckenstege. Der erste Verarbeitungsbereich weist eine eingängige Schnecke mit einem Schneckenstegen auf, wohingegen der zweite Verarbeitungsbereich eine zweigängige Schnecke mit zwei Schneckenstegen aufweist. Der Ausdruck einer eingängigen bzw. zweigängigen Schnecke ist hierbei für den Fachmann im Bereich der Extrusionstechnik ebenso klar wie der Ausdruck Schneckensteg, mit dem die flügelartigen Erhebungen bezeichnet werden, welche sich schraubenförmig an der Schneckenwelle entlang erstrecken.

Nach Einschätzung des Erfinders ergeben sich die Vorteile des erfindungsgemäßen Extruders sowie des daran anknüpfenden Extrudersystems und des Verfahrens insbesondere dadurch, dass die verarbeitete Kautschukmischung die vorstehend definierten Bereiche mit dem unterschiedlichen Schneckendesign durchläuft. Der Fachmann versteht insoweit, dass es zielführend ist, die zwei Verarbeitungsbereiche mit einer gewissen Länge aufzuführen, sodass die Kautschukmischung die spezifischen Verarbeitungsbedingungen, welche durch das ein- bzw. zweigängige Schneckendesign erzeugt werden, auch für eine gewisse Zeit erfährt. Insoweit ist es den Erfindern gelungen, für die jeweiligen Verarbeitungsbereiche besonders zielführende Längenbereiche zu identifizieren, mit denen sich in den Experimenten des Erfinders besonders vorteilhafte Extrusionseigenschaften ergeben haben, insbesondere mit vorgewärmten vulkanisierbaren Kautschukmischungen. Bevorzugt ist zunächst ein erfindungsgemäßer Extruder, wobei der erste Verarbeitungsbereich eine Länge im Bereich von 0,5*L bis 0,7*L, bevorzugt im Bereich von 0,55*L bis 0,65*L, aufweist, wobei L die Länge der Extruderkammer ist, und/oder wobei der erste Verarbeitungsbereich eine Länge im Bereich von 8,5*D bis 10,5*D, bevorzugt im Bereich von 9*D bis 10*D, aufweist. Bevorzugt ist zusätzlich oder alternativ ein erfindungsgemäßer Extruder, wobei der zweite Verarbeitungsbereich eine Länge im Bereich von 0,15*L bis 0,35*L, bevorzugt im Bereich von 0,2*L bis 0,3*L, aufweist, wobei L die Länge der Extruderkammer ist, und/oder wobei der zweite Verarbeitungsbereich eine Länge im Bereich von 3*D bis 5*D, bevorzugt im Bereich von 3,5*D bis 4,5*D, aufweist.

Darüber hinaus ist es dem Erfinder gelungen, für die Steigung der jeweiligen Schneckenstege, d. h. mittelbar für die Anzahl der Windungen pro Strecke, bevorzugte Bereiche zu identifizieren. Bevorzugt ist nämlich ein erfindungsgemäßer Extruder, wobei die Steigung der Schneckenstege im ersten Verarbeitungsbereich und/oder zweiten Verarbeitungsbereich und/oder dritten Verarbeitungsbereich, bevorzugt in sämtlichen Verarbeitungsbereichen, im Bereich von 1,1 bis 1,9, bevorzugt im Bereich von 1,3 bis 1,7, liegt.

Im zweiten Verarbeitungsbereich liegen zwei Schneckenstege vor. Zumindest theoretisch wäre es dabei denkbar, diese Schneckenstege mit einer leicht unterschiedlichen Steigung auszuführen. Hierdurch würde sich der Gangunterschied zwischen den Schneckenstegen über die Länge des Verarbeitungsbereichs hinweg verändern, was für bestimmte Anwendungen wünschenswert sein mag. Nach Einschätzung des Erfinders ist es jedoch insbesondere vorteilhaft, die beiden Schneckenstege mit einer möglichst ähnlichen Steigung auszuführen, sodass sich über die Länge des Verarbeitungsbereichs eine möglichst geringe Veränderung im Gangunterschied ergibt. Für den absoluten Gangunterschied zwischen den Schnecken schlagen die Erfinder dabei vor, dass dieser vorteilhafterweise möglichst nah an 180° liegen sollte, sodass die Schneckenstege entlang des Verarbeitungsbereichs weitgehend äquidistant angeordnet sind, da sich hierdurch besonders vorteilhafte Verarbeitungseigenschaften ergeben. Bevorzugt ist demgemäß ein erfindungsgemäßer Extruder, wobei sich die Steigung der zwei Schneckenstege im zweiten Verarbeitungsbereich um 10 % oder weniger, bevorzugt um 5 % oder weniger, besonders bevorzugt um 1 % oder weniger, ganz besonders bevorzugt im Wesentlichen gar nicht, unterscheidet. Bevorzugt ist zusätzlich oder alternativ ein erfindungsgemäßer Extruder, wobei der Gangunterschied zwischen den zwei Schneckenstege im zweiten Verarbeitungsbereich im Bereich von 160° bis 200°, bevorzugt im Bereich von 170° bis 190°, besonders bevorzugt bei im Wesentlichen 180°, liegt.

Wie vorstehend erläutert, unterscheiden sich der erste und der zweite Verarbeitungsbereich durch die Zahl der Schneckenstege. Darüber hinaus ist es denkbar, zwischen diesen Bereichen auch die Steigung der Schneckenstege zu verändern. Insoweit werden jedoch besonders gute Ergebnisse dadurch erzielt, wenn für die jeweiligen Schneckenstege der Verarbeitungsbereiche möglichst gleiche Steigungen angesetzt werden. In besonders vorteilhaften Ausgestaltungen des erfindungsgemäßen Extruders kann somit ein Schneckensteg vorgesehen werden, welcher sich in einer im Wesentlichen unveränderten Art und Weise vom Beginn des ersten Verarbeitungsbereich bis zum Ende des zweiten Verarbeitungsbereichs erstreckt, welcher im zweiten Verarbeitungsbereich jedoch durch einen zusätzlichen Schneckensteg ergänzt wird, welcher in vorteilhafterweise mit der gleichen Steigung und einem Gangunterschied von etwa 180° konzipiert wird, um das gewünscht 1-2-Design zu realisieren. Bevorzugt ist ein erfindungsgemäßer Extruder, wobei sich die Steigung der Schneckenstege zwischen dem ersten Verarbeitungsbereich und dem zweiten Verarbeitungsbereich um 10 % oder weniger, bevorzugt um 5 % oder weniger, besonders bevorzugt um 1 % oder weniger, ganz besonders bevorzugt im Wesentlichen gar nicht, unterscheidet.

Neben der Steigung der Schneckenstege ließe sich prinzipiell zwischen den Verarbeitungsbereichen auch deren Querschnitt, insbesondere definiert als der Querschnitt orthogonal zu der Längsrichtung des Schneckenstegs, variieren, beispielsweise mit einem Wechsel von einem spitzeren Design der Schneckenstege hin zu einer bauchigeren Ausgestaltung. Auch insoweit hat der Erfinder jedoch festgestellt, dass es mit Blick auf die erzielbaren Extrusionsdurchsätze vorteilhaft ist, für die Schneckenstege in den Verarbeitungsbereichen im Wesentlichen die gleichen Querschnitte vorzusehen. Bevorzugt ist folglich ein erfindungsgemäßer Extruder, wobei sich der Querschnitt der Schneckenstege innerhalb eines Verarbeitungsbereichs und/oder zwischen unterschiedlichen Schneckenstege in einem Arbeitsbereich und/oder zwischen Schneckenstege zweier benachbarter Verarbeitungsbereiche, um 10 % oder weniger, bevorzugt um 5 % oder weniger, besonders bevorzugt um 1 % oder weniger, ganz besonders bevorzugt im Wesentlichen gar nicht, ändert, bezogen auf die Querschnittsfläche orthogonal zur Längsrichtung des Schneckensteges.

Insbesondere zum Zwecke eines möglichst einfachen Schneckendesigns und infolge dessen einer einfachen Herstellbarkeit des erfindungsgemäßen Extruders, durch die insbesondere sehr günstige Extruder erhalten werden können, ist es vorteilhaft, die Schneckenstege als durchgehende Scheckenstege auszubilden, was bedeutet, dass diese entlang der Längsrichtung des Schneckensteges durchgehend im Wesentlichen die gleiche Höhe aufweisen, mit anderen Worten, gleich weit in radialer Richtung nach außen ragen. In dieser Ausgestaltung handelt es sich um einen erfindungsgemäßen Extruder, wobei die Schneckenstege im ersten Verarbeitungsbereich und/oder im zweiten Verarbeitungsbereich, bevorzugt in sämtlichen Verarbeitungsbereichen, im Wesentlichen durchgehende Schneckenstege sind.

Nach Einschätzung des Erfinders ist es jedoch besonders bevorzugt, insbesondere auch in Kombination mit sämtlichen sonstigen als bevorzugt bezeichneten Ausgestaltungen, den Extruder mit Extruderstiften auszurüsten, wie sie aus anderen Kaltfütterextrudern bekannt sind. Um trotz der von der Innenseite der Extruderwandung radial nach innen reichenden Extruderstifte eine ungehinderte Rotation der Schneckenwelle zu ermöglichen, ist es dabei notwendig, in den Schneckenstegen Aussparungen, d. h. Bereiche mit einem verringerten Durchmesser der Flügel, vorzusehen, durch die Extruderstifte hindurchlaufen können. Insbesondere bei sehr weit in das Innere der Extruderkammer hineinragenden Extruderstiften kann diese Reduktion so weit gehen, dass die Schneckenstege vollständig unterbrochene Schneckenstege sind, sodass die Extruderstifte zwischen den Abschnitten des Schneckenstegs bis auf die Schneckenwelle hinabreichen können. Bevorzugt ist entsprechend ein erfindungsgemäßer Extruder, wobei der Extruderkörper im ersten Verarbeitungsbereich einen oder mehrere vom Extruderkörper radial nach Innen in die Extruderkammer ragende Stifte umfasst, wobei die Stifte bevorzugt in einer oder mehreren Stiftanordnungen auf der gleichen Längenposition über den Umfang verteilt vorliegen, bevorzugt gleichmäßig verteilt, wobei die Schneckenstege im ersten Verarbeitungsbereich auf der Höhe jedes Stiftes eine Ausnehmung oder eine Stegunterbrechung aufweisen, wobei der Extruder so ausgelegt ist, dass die Stifte bei Rotation der Schneckenwelle durch die Ausnehmung oder die Stegunterbrechung geführt werden. Bevorzugt ist zusätzlich oder alternativ ein erfindungsgemäßer Extruder, wobei der Extruderkörper im zweiten Verarbeitungsbereich einen oder mehrere vom Extruderkörper radial nach Innen in die Extruderkammer ragende Stifte umfasst, wobei die Stifte bevorzugt in einer oder mehreren Stiftanordnungen auf der gleichen Längenposition über den Umfang verteilt vorliegen, bevorzugt gleichmäßig verteilt, wobei der Schneckensteg im zweiten Verarbeitungsbereich auf der Höhe jedes Stiftes eine Ausnehmung oder eine Stegunterbrechung aufweisen, wobei der Extruder so ausgelegt ist, dass die Stifte bei Rotation der Schneckenwelle durch die Ausnehmung oder die Stegunterbrechung geführt werden.

Besonders bevorzugt ist ein erfindungsgemäßer Extruder, wobei der Extruderkörper 6 oder mehr, bevorzugt 8 oder mehr, besonders bevorzugt 10 oder mehr, Stiftanordnungen von über den Umfang verteilten Stiften auf unterschiedlichen Längenpositionen umfasst, wobei die Stiftanordnungen bevorzugt ungleichmäßig über die Länge der Extruderkammer verteilt sind, bevorzugt in zwei oder mehr separaten Gruppen von äquidistant voneinander beabstandeten Stiftanordnungen.

Die Erfindung betrifft zudem ein Extrudersystem zur Verwendung bei der Extrusion von vulkanisierbaren Kautschukmischungen, umfassend:
I) einen erfindungsgemäßen Extruder, und
II) eine Temperiereinheit zum Vorwärmen einer vulkanisierbaren Kautschukmischung außerhalb des Extruders.

In dem erfindungsgemäßen Extrudersystem wird der erfindungsgemäße Extruder zumindest mit einer Temperiereinheit kombiniert. Diese Temperiereinheit dient dem Vorwärmen der vulkanisierbaren Kautschukmischung außerhalb des Extruders. Das erfindungsgemäße Extrudersystem ist insoweit für den Fachmann ungewöhnlich, weil eine Temperiereinheit, deren Einsatz prinzipiell aus dem Warmfütterprozess bekannt ist mit einem Extruder kombiniert wird, der zumindest hinsichtlich seiner Länge und in vielen Fällen auch hinsichtlich des Vorliegens von Extruderstiften, eher für den Kaltfütterprozess konzipiert ist, auch wenn das Ausmaß der für das Verfahren angestrebten Vortemperierung zumeist niedriger sein wird als im Warmfütterprozess und entsprechend weniger leistungsstarke Temperiereinheiten vorgesehen werden können. Wie vorstehend erläutert, ergeben sich durch das vorteilhafte Schneckendesign des erfindungsgemäßen Extruders hierbei in synergistischer Weise die anwendungstechnischen Vorteile eines Kaltfütterprozesses, ohne dass es zu einer unerwünschten Durchsatzreduktion oder einem ungewollten Vulkanisieren der vulkanisierbaren Kautschukmischung im Inneren des

Extruders kommt, so dass auch die Verarbeitung von anspruchsvollen Kautschukmischungen effizient möglich wird.

Bei der im erfindungsgemäßen Extrudersystem einzusetzenden Temperiereinheit kann es sich sowohl um eine Einheit für eine mechanische Vorwärmung, d. h. durch einen mechanischen Energieeintrag in die Kautschukmischung, beispielsweise durch Reibung, als auch durch klassischere Mittel zur thermischen Vorwärmung, beispielsweise Heizeinheiten handeln, wobei nach Einschätzung der Erfinder insbesondere der Einsatz von strahlungsbasierten Vorrichtungen zur Vortemperierung der Kautschukmischung besonders geeignet ist. Bevorzugt ist entsprechend ein erfindungsgemäßes Extrudersystem, wobei die Temperiereinheit Mittel zur mechanischen Vorwärmung der vulkanisierbaren Kautschukmischung durch mechanischen Energieeintrag umfasst, und/oder wobei die Temperiereinheit Mittel zur thermischen Vorwärmung der vulkanisierbaren Kautschukmischung umfasst, bevorzugt ein Heißluftgebläse oder eine sonstige Vorrichtung zum kontaktlosen Vorwärmen, bspw. mittels Mikrowellen oder Infrarotstrahlung.

Die wesentlichen Bestandteile des erfindungsgemäßen Extrudersystems sind der erfindungsgemäße Extruder und die Temperiereinheit. Darüber hinaus ist es nach Einschätzung des Erfinders zielführend, ein leistungsfähiges Fördersystem zwischen der Temperiereinheit und der Eingabeöffnung des Extruders vorzusehen, wobei zusätzlich oder alternativ auch eine elektronische Steuerungsvorrichtung vorgesehen werden kann, um die mit dem Extrudersystem umsetzbare Verfahrensführung möglichst weitgehend automatisieren zu können. Bevorzugt ist entsprechend ein erfindungsgemäßes Extrudersystem, wobei das Extrudersystem zusätzlich umfasst:
III) eine Fördereinheit zur Förderung der vulkanisierbaren Kautschukmischung aus der Temperiereinheit zu der Eingabeöffnung des Extruders, und/oder
IV) eine elektronische Datenverarbeitungsvorrichtung zur Steuerung des Extrudersystems.

Die Erfindung betrifft auch ein Verfahren zur Extrusion einer vulkanisierbaren Kautschukmischung mit einem erfindungsgemäßen Extrudersystem, umfassend die Verfahrensschritte:
u) Herstellen oder Bereitstellen einer vulkanisierbaren Kautschukmischung,
v) Vorwärmen der vulkanisierbaren Kautschukmischung mit der Temperiereinheit des Extrudersystems, wobei das Vorwärmen so erfolgt, dass die vorgewärmte vulkanisierbare Kautschukmischung eine mittlere Temperatur im Bereich von 50 bis 110 °C aufweist,
w) Eingeben der vorgewärmten vulkanisierbaren Kautschukmischung in den Einziehbereich des Extruders durch die Eingabeöffnung, und
x) Extrudieren der vulkanisierbaren Kautschukmischung mit dem Extruder.

Das erfindungsgemäße Verfahren setzt darauf, dass die zu verarbeitende vulkanisierbare Kautschukmischung zunächst hergestellt oder bereitgestellt wird, wobei die Herstellung beispielsweise unmittelbar vorher in einer typischen Mischlinie erfolgen kann. Anschließend wird die vulkanisierbare Kautschukmischung, in Abweichung von dem klassischen Kaltfütterprozess, mit der Temperiereinheit vorgewärmt, wobei nach Einschätzung der Erfinder die vorstehend definierte Temperatur eingestellt werden sollte, was unter den typischen Temperaturen für einen Warmfütterprozess liegt. Bevorzugt ist insoweit ein erfindungsgemäßes Verfahren, wobei das Vorwärmen so erfolgt, dass die vorgewärmte vulkanisierbare Kautschukmischung eine mittlere Temperatur im Bereich von 60 bis 100 °C, bevorzugt im Bereich von 70 bis 90 °C, aufweist.

Anschließend wird die derart vorgewärmte vulkanisierbare Kautschukmischung in den Extruder gegeben, wobei die Kautschukmischung nach Durchlaufen der Eingabeöffnung im Einziehbereich von der Schneckenwelle erfasst und in den Extruder eingezogen wird, wo diese dann mit der spezifischen Schneckenwelle des erfindungsgemäßen Extruders durch die Extruderkammer geführt wird.

Bevorzugt ist ein erfindungsgemäßes Verfahren, wobei das Extrudieren so erfolgt, dass die extrudierte vulkanisierbare Kautschukmischung eine mittlere Temperatur im Bereich von 50 bis 145 °C, bevorzugt im Bereich von 80 bis 135 °C, aufweist.

Bevorzugt ist zusätzlich oder alternativ ein erfindungsgemäßes Verfahren, wobei das Extrudieren mit einem Durchsatz im Bereich von 10 bis 45 kg/min, bevorzugt im Bereich von 20 bis 35 kg/min, erfolgt.

Nachfolgend werden die Erfindung und bevorzugte Ausführungsformen der Erfindung unter Bezugnahme auf die beiliegende Figur näher erläutert und beschrieben. Dabei zeigt:

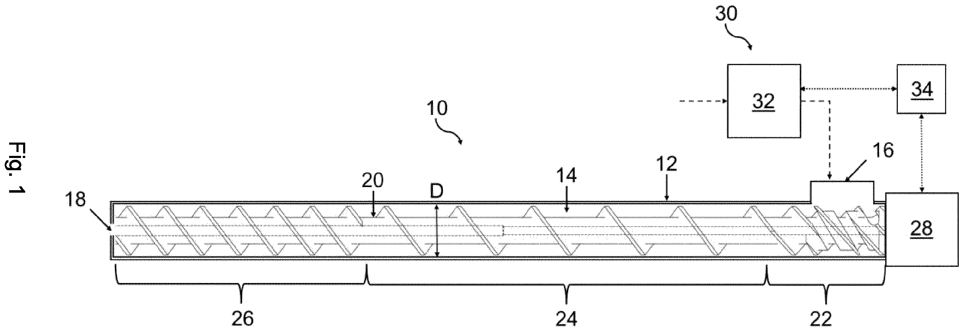

- Fig. 1: eine schematische Querschnittsdarstellung eines erfindungsgemäßen Extrudersystems mit einem erfindungsgemäßen Extruder in einer bevorzugten Ausführungsform.

Die Fig. 1 zeigt eine schematische Querschnittsdarstellung durch ein erfindungsgemäßes Extrudersystem 30. Dieses Extrudersystem 30 umfasst eine Temperiereinheit 32, welche im gezeigten Beispiel eine mechanische Vorwärmung mit der Vorwärmung durch Infrarotstrahlung kombiniert, um hierdurch die später zu extrudierende vulkanisierbare Kautschukmischung auf eine Temperatur von etwa 80 °C zu bringen.

Diese derart vorgewärmte vulkanisierbare Kautschukmischung wird über eine Fördereinheit (nicht gezeigt) von der Temperiereinheit 32 zu dem erfindungsgemäßen Extruder 10 geführt und in dessen Einlassöffnung 16 eingegeben. Nach Eintritt der vulkanisierbaren Kautschukmischung wird diese von den rotierenden Schneckenwelle 20 erfasst, welche von einer Antriebseinheit 28 bewegt wird. Im gezeigten Beispiel der Fig. 1 werden sowohl die Temperiereinheit 32 als auch die Fördereinheit und die Antriebseinheit 28 von einer elektronischen Datenverarbeitungsvorrichtung 34 gesteuert, um den Prozess möglichst weitgehend zu automatisieren.

Der Extruderkörper 12 weist eine Extruderkammer 14 auf, in der die Schneckenwelle 20 rotierbar aufgehangen ist. An dem von der Eingabeöffnung 16 abgewandten Ende der Extruderkammer 14 ist die Extrusionsöffnung 18 angeordnet. Zwischen der Eingabeöffnung 16 und der Extrusionsöffnung 18 weist die Extruderkammer 14 durchgehend einen kreisförmigen Querschnitt mit einem im Wesentlichen konstanten Durchmesser D auf.

Die Länge der Extruderkammer 14 in dem in Fig. 1 gezeigten Extruder 10 beträgt etwa 14,5 D.

Die in Fig. 1 gezeigte Extruderschnecke weist vier Bereiche auf, welche sich hinsichtlich der Zahl und teilweise der Ausgestaltung der Schneckenstege unterscheiden. Entsprechend besteht der in Fig. 1 gezeigte Extruder 10 aus lediglich vier Bereichen, nämlich dem Einziehbereich 22, dem ersten Verarbeitungsbereich 24, dem zweiten Verarbeitungsbereich 26 und dem dritten Verarbeitungsbereich 28, welche jeweils durch geschweifte Klammern kenntlich gemacht sind.

Der Einziehbereich 22 erstreckt sich unter der Eingabeöffnung 16 noch einen Teil in den geschlossenen Bereich der Extruderkammer 14 hinein. Zur Optimierung der Einziehwirkung wird hierbei eine komplexe Kombination von Schneckenstegen verwendet, die insbesondere steiler angeordnet sind als in den nachfolgenden Verarbeitungsbereichen. Der Beginn des ersten Verarbeitungsbereichs 24 ist in der Fig. 1 deutlich daran zu erkennen, dass die Steigung des Schneckenstegs etwas abflacht, wobei der entsprechende Schneckensteg hiernach im Wesentlichen unverändert durch den ersten Verarbeitungsbereich 24 und den zweiten Verarbeitungsbereich 26 verläuft.

In dem zweiten Verarbeitungsbereich 26 wird dieser Schneckensteg, welcher im ersten Verarbeitungsbereich 24 den einzigen Schneckensteg auf der Schneckenwelle 20 bildet, durch einen um 180° phasenverschobenen zweiten Schneckensteg ergänzt, sodass für die Verarbeitungsbereiche ein vorteilhaftes 1-2-Design erhalten wird.

Im gezeigten Beispiel der Fig. 1 beträgt die Länge des Einziehbereichs 22 etwa 2,5*D, die Länge des ersten Verarbeitungsbereichs 24 etwa 7,5*D, und die Länge des zweiten Verarbeitungsbereichs 26 etwa 4,5*D.

In Fig. 1 nicht gezeigt sind aus Gründen der Übersichtlichkeit die Pinndurchbrüche, mit denen der Extruder 10 ausgerüstet ist, wobei sich die Extruderpinns jeweils bis zur Schneckenwelle 20 erstrecken, sodass die Schneckenstege mit Stegunterbrechungen ausgeführt sind. Die Anzahl der Extruderstifte kann je nach Extrudergröße variieren.

Mit dem in Fig. 1 gezeigten Extruder 10 und dem spezifischen Schneckendesign ist der Extruder 10 trotz seiner Länge von etwa 14,5*D in vorteilhafter Weise geeignet, auch warme Mischungen ohne signifikante Temperaturerhöhungen stabil zu extrudieren und hierbei gleichzeitig den Durchsatz gegenüber klassischen Kaltfütterextrudern um 30 bis 70 % zu erhöhen.

### Bezugszeichenliste

- 10: Extruder
- 12: Extruderkörper
- 14: Extruderkammer
- 16: Eingabeöffnung
- 18: Extrusionsöffnung
- 20: Schneckenwelle
- 22: Einziehbereich
- 24: erster Verarbeitungsbereich
- 26: zweiter Verarbeitungsbereich
- 28: Antriebseinheit
- 30: Extrudersystem
- 32: Temperiereinheit
- 34: Elektronische Datenverarbeitungsvorrichtung

## Patentansprüche

1. Extruder (10) zur Verwendung bei der Extrusion von vulkanisierbaren Kautschukmischungen, umfassend:
i) einen Extruderkörper (12) mit einer im Inneren angeordneten Extruderkammer (14), wobei die Extruderkammer (14) eine Eingabeöffnung (16) und eine Extrusionsöffnung (18) umfasst, wobei die Extruderkammer (14) eine Länge im Bereich von 10*D bis 20*D aufweist, wobei D der Durchmesser der Extruderkammer (14) ist, und
ii) eine rotierbar in der Extruderkammer (14) angeordnete Schneckenwelle (20),
wobei der Extruder (10) einen im Bereich der Eingabeöffnung (16) angeordneten Einziehbereich (22), einen ersten Verarbeitungsbereich (24) und einen zweiten Verarbeitungsbereich (26) umfasst,
wobei der erste Verarbeitungsbereich (24) an den Einziehbereich (22) anschließt und wobei der zweite Verarbeitungsbereich (26) zwischen dem ersten Verarbeitungsbereich (24) und der Extrusionsöffnung (18) angeordnet ist,
wobei sich die Schneckenwelle (20) im Einziehbereich (22) hinsichtlich der Zahl der Schneckenstege und/oder der Steigung des oder der Schneckenstege und/oder der Form des oder der Schneckenstege von der Schneckenwelle (20) im ersten Verarbeitungsbereich (24) unterscheidet,
wobei die Schneckenwelle (20) im ersten Verarbeitungsbereich (24) eine eigängige Schnecke mit einem Schneckensteg und im zweiten Verarbeitungsbereich (26) eine zweigängige Schnecke mit zwei Schneckenstegen.

2. Extruder (10) nach Anspruch 1, wobei der Extruderkörper (12) im ersten Verarbeitungsbereich (24) und/oder im zweiten Verarbeitungsbereich (26) einen oder mehrere vom Extruderkörper (12) radial nach Innen in die Extruderkammer (14) ragende Stifte umfasst.

3. Extruder (10) nach einem der Ansprüche 1 oder 2, wobei der Extruder (10) außer dem Einziehbereich (22), dem ersten Verarbeitungsbereich (24) und dem zweiten Verarbeitungsbereich (26) keine weiteren Bereiche mit einer Länge von 0,5*D oder mehr umfasst.

4. Extruder (10) nach einem der Ansprüche 1 bis 3, wobei der Einziehbereich eine Länge im Bereich von 0,05*L bis 0,25*L, aufweist, wobei L die Länge der Extruderkammer ist.

5. Extruder (10) nach einem der Ansprüche 1 bis 4, wobei der erste Verarbeitungsbereich (24) eine Länge im Bereich von 0,5*L bis 0,7*L aufweist, wobei L die Länge der Extruderkammer (14) ist.

6. Extruder (10) nach einem der Ansprüche 1 bis 5, wobei der zweite Verarbeitungsbereich (26) eine Länge im Bereich von 0,15*L bis 0,35*L wobei L die Länge der Extruderkammer (14) ist.

7. Extrudersystem (30) zur Verwendung bei der Extrusion von vulkanisierbaren Kautschukmischungen, umfassend:
I) einen Extruder (10) nach einem der Ansprüche 1 bis 6, und
II) eine Temperiereinheit (32) zum Vorwärmen einer vulkanisierbaren Kautschukmischung außerhalb des Extruders (10).

8. Extrudersystem (30) nach Anspruch 7, wobei die Temperiereinheit (32) Mittel zur mechanischen Vorwärmung der vulkanisierbaren Kautschukmischung durch mechanischen Energieeintrag umfasst, und/oder wobei die Temperiereinheit (32) Mittel zur thermischen Vorwärmung der vulkanisierbaren Kautschukmischung umfasst.

9. Verfahren zur Extrusion einer vulkanisierbaren Kautschukmischung mit einem Extrudersystem (30) nach einem der Ansprüche 7 oder 8, umfassend die Verfahrensschritte:
u) Herstellen oder Bereitstellen einer vulkanisierbaren Kautschukmischung,
v) Vorwärmen der vulkanisierbaren Kautschukmischung mit der Temperiereinheit (32) des Extrudersystems (30), wobei das Vorwärmen so erfolgt, dass die vorgewärmte vulkanisierbare Kautschukmischung eine mittlere Temperatur im Bereich von 50 bis 110 °C aufweist,
w) Eingeben der vorgewärmten vulkanisierbaren Kautschukmischung in den Einziehbereich (22) des Extruders (10) durch die Eingabeöffnung (16), und
x) Extrudieren der vulkanisierbaren Kautschukmischung mit dem Extruder (10).

10. Verfahren nach Anspruch 9, wobei das Vorwärmen so erfolgt, dass die vorgewärmte vulkanisierbare Kautschukmischung eine mittlere Temperatur im Bereich von 60 bis 100 °C aufweist.
